# EUROPEAN PATENT APPLICATION

(11) **EP 2 743 457 A2**
(43) Date of publication of application: **18.06.2014**
(21) Application number: 13196171.6
(22) Date of filing: 09.12.2013
(51) Int. Cl.: F01D 9/02, F01D 25/28, F23R 3/60

(54) **Turbine transition piece alignment apparatus and method**

(30) Priority: 14.12.2012 US 201213714873
(71) Applicant: General Electric Company, Schenectady, New York 12345 (US)
(72) Inventor: Holmes, James Bradford, Greenville, SC South Carolina 29615-4614 (US); Hollis, James Robert, Greenville, SC South Carolina 29615 (US); Sullivan, Wayne David, Wilmington, NC North Carolina 28412 (US)
(74) Representative: Picker, Madeline Margaret

(57) **Abstract**

An apparatus (2) for aligning an end of a transition piece (TP) (4) with an outlet (6) of a combustor component (8) is disclosed. The apparatus (2) includes: a mount (10) configured to attach to the combustor component (8) proximate the outlet (6); a hinge component (16) pivotably connected to the mount (10), the hinge component (16) having an axis of motion substantially perpendicular with a primary axis of the combustor component (8); a dummy transition piece component (18) fixedly attached to the hinge component (16) for pivoting with the hinge component; and an adjustment apparatus (32) having a first end (34) fixedly attached to the dummy TP (18), and a second end (38) with an actuatable adjustment member (40) for modifying a position of the dummy TP (18).

## Description

The subject matter disclosed herein relates to power systems. More particularly, the subject matter relates to turbine systems and associated alignment apparatuses.

Conventional turbines, such as gas turbines, generally include three sections: a compressor section, a combustor section and a turbine section. In some gas turbine engine designs, a duct, known as a transition piece (or simply, transition), also referred to as a "TP" extends between the combustor section and turbine section. The transition piece (TP) serves many purposes, one of which is to direct the hot gases produced in the combustor section to the turbine section.

In order to ensure proper operation of the gas turbine engine, the inlet end of the TP and the combustor section should be aligned with precision. However, conventional alignment methods can be cumbersome, time consuming, labor intensive, unsafe, and require manual mathematical calculations. Consequently, rework operations have been common when such conventional methods are employed.

Various embodiments of the invention include alignment systems for turbines. In various particular embodiments, an apparatus for aligning an end of a transition piece (TP) with an outlet of a combustor component is disclosed. The apparatus can include: a mount configured to attach to the combustor component proximate the outlet; a hinge component pivotably connected to the mount, the hinge component having an axis of motion substantially perpendicular with a primary axis of the combustor component; a dummy transition piece (dummy TP) component fixedly attached to the hinge component for pivoting with the hinge component; and an adjustment apparatus having a first end fixedly attached to the dummy TP, and a second end with an actuatable adjustment member for modifying a position of the dummy TP.

A first aspect of the invention includes an apparatus for aligning an end of a transition piece (TP) with an outlet of a combustor component. The apparatus can include: a mount configured to attach to the combustor component proximate the outlet; a hinge component pivotably connected to the mount, the hinge component having an axis of motion substantially perpendicular with a primary axis of the combustor component; a dummy transition piece (dummy TP) component fixedly attached to the hinge component for pivoting with the hinge component; and an adjustment apparatus having a first end fixedly attached to the dummy TP, and a second end with an actuatable adjustment member for modifying a position of the dummy TP.

A second aspect of the invention includes a method of aligning a transition piece (TP) with an outlet of a combustor system. The method can include: positioning a TP alignment apparatus in contact with the outlet of the combustor component, the apparatus including: a mount configured to attach to the combustor component proximate the outlet; a hinge component pivotably connected to the mount, the hinge component having an axis of motion substantially perpendicular with a primary axis of the combustor component; a dummy transition piece (dummy TP) component fixedly attached to the hinge component for pivoting with the hinge component, the dummy TP having a set of apertures corresponding with set of apertures proximate the outlet of the combustion component; and an adjustment apparatus having a first end fixedly attached to the dummy TP, and a second end with an actuatable adjustment member for modifying a position of the dummy TP; measuring a position of the dummy TP component; removing the TP alignment apparatus from contact with the outlet of the compressor; and installing a TP according to the measured position of the dummy TP component.

A third aspect of the invention includes an apparatus for aligning an end of a transition piece (TP) with an outlet of a combustor component. The apparatus can include: a mount configured to attach to the combustor component proximate the outlet; a hinge component pivotably connected to the mount, the hinge component having an axis of motion substantially perpendicular with a primary axis of the combustor component; a dummy transition piece (dummy TP) component fixedly attached to the hinge component for pivoting with the hinge component, the dummy TP having a set of measurement apertures configured to receive a measurement gauge, the set of measurement apertures each located proximate an edge of the dummy TP; and an adjustment apparatus having a first end fixedly attached to the dummy TP, and a second end with an actuatable adjustment member for modifying a position of the dummy TP.

These and other features of this invention will be more readily understood from the following detailed description of the various aspects of the invention taken in conjunction with the accompanying drawings that depict various embodiments of the invention, in which:
FIG. 1 shows a three-dimensional perspective view of an apparatus according to various embodiments of the invention.
FIG. 2 shows a close-up three-dimensional perspective view of a portion of the apparatus of FIG. 1, according to various embodiments of the invention.
FIG. 3 shows an end view of a portion of the apparatus of FIG. 1 according to various embodiments of the invention.
FIG. 4 shows a flow chart depicting an illustrative method according to various embodiments of the invention.

It is noted that the drawings of the invention are not necessarily to scale. The drawings are intended to depict only typical aspects of the invention, and therefore should not be considered as limiting the scope of the invention. In the drawings, like numbering represents like elements between the drawings.

As noted, the subject matter disclosed herein relates to power systems. More particularly, the subject matter relates to turbine systems and associated alignment apparatuses.

As described herein, conventional alignment devices and methods for turbine transition pieces (TPs) can be cumbersome, time consuming, labor intensive, unsafe, and require manual mathematical calculations. Consequently, rework operations have been common when such conventional methods are employed.

In contrast to the conventional approaches, various embodiments of the invention include an alignment apparatus and associated method which increases the accuracy of alignment of the transition piece (TP), and also reduces the burden upon (and physical danger to) the human operator performing the alignment. The alignment apparatus according to various embodiments of the invention can accurately represent the size and shape of the TP for the purposes of alignment of the TP. The alignment apparatus has a lighter weight than the TP, and includes a set of adjustable dials which allow for alignment of the later installed TP and the casing hardware.

In some cases, the alignment apparatus according to various embodiments of the invention can be designed to facilitate the accurate installation of a gas turbine transition piece (TP) in relatively little time. The TP weighs approximately 200 pounds (lbs), and can be difficult for an operator (e.g., a human operator) to install due to the weight and distances involved in installation. The relatively lightweight apparatus according to various embodiments of the invention can determine the relationship of the TP to the mating components in the combustion system of a gas turbine prior to installing the hardware (TP and its associated couplings). The apparatus can provide a direct measurement for the TP bull-horn shim size, and also provides the "B" & "C" clearance checks proximate the location of the TP installation.

As described herein, the apparatus according to various embodiments of the invention can include several components specifically designed to mount to the combustion hardware such that when used can reduce (and potentially eliminate) the conventional need for trial fit testing of the TP hardware during installation.

In some examples, the apparatus can mount to the turbine bull horn using a cross fixture which utilizes two knob-like fasteners (e.g., clamps or screws) to attach to the bull horn. This cross fixture can be attached to the main apparatus utilizing another mounting location centered on the cross fixture, with an adjustment mechanism (e.g., an adjustable knob) which is attached to the TP fixture arm. This TP apparatus can replicate the actual TP with respect to the overall sizing and positioning between the bull horn and the nozzle support ring in the combustion system.

At the lower (aft) end of the apparatus, proximate the nozzle support ring interface, the apparatus can be attached (e.g., pinned) utilizing a mounting fixture which attaches to the nozzle support ring and pivotably attaches (e.g., pins) to the apparatus. This pivotable attachment (e.g., pin) allows the fixture to pivot at a predetermined location in space proximate its connection with the nozzle support ring.

The relationship of the pivot point and the dimensional relationship of the overall apparatus can be used to measure and determine the bull horn shims required to obtain the required "B" & "C" clearances for the actual TP installation. In various embodiments, the dummy TP has approximately six (6) holes located along each of the top and bottom edges of the dummy TP, providing for a total of approximately twelve (12) measurement points along the body of the dummy TP. These holes can be sized to accommodate a dial indicator or a digital indicator to measure distances along the body of the dummy TP, e.g., along the edges of the dummy TP.

These measurements obtained via the measurement locations along the dummy TP can provide information for determining the thickness of one or more bull horn shims. Those measurements obtained along the edges of the dummy TP are conventionally called the "B" & "C" clearances, and define the amount of space necessary for the proper installation of the actual TP hardware.

The bull horn shim size can be determined by adjusting the position of the dummy TP, e.g., by loosening the adjustable knob located proximate the cross fixture and the dummy TP arm, and taking the measurements (e.g., 1-12 measurements) along the dummy TP, and comparing these measurements to the design criteria for the actual TP "B" & "C" clearances. In some cases, once the readings at the dummy TP are within the design specifications, then the gap is measured between the dummy TP arm and the cross fixture interface using a measurement device (e.g., a conventional depth mic) through the holes provided in the dummy TP fixture. This gap can dictate the shim sizes for the bull horn. Subsequently, these shims can be installed behind the bull horn fixture and the "B" & "C" clearances can then be checked again for final verification that the desired "B" & "C" clearances were achieved.

In various particular embodiments, an apparatus for aligning an end of a transition piece (TP) with an outlet of a combustor component is disclosed. In some cases, the apparatus can include: a mount configured to attach to the combustor component proximate the outlet; a hinge component pivotably connected to the mount, the hinge component having an axis of motion substantially perpendicular with a primary axis of the combustor component; a dummy transition piece (dummy TP) component fixedly attached to the hinge component for pivoting with the hinge component; and an adjustment apparatus having a first end fixedly attached to the dummy TP, and a second end with an actuatable adjustment member for modifying a position of the dummy TP.

Various other embodiments of the invention include a method of aligning a transition piece (TP) with an outlet of a combustor system. The method can include: positioning a TP alignment apparatus in contact with the outlet of the combustor component, the apparatus including: a mount configured to attach to the combustor component proximate the outlet; a hinge component pivotably connected to the mount, the hinge component having an axis of motion substantially perpendicular with a primary axis of the combustor component; a dummy transition piece (dummy TP) component fixedly attached to the hinge component for pivoting with the hinge component, the dummy TP having a set of apertures corresponding with set of apertures proximate the outlet of the combustion component; and an adjustment apparatus having a first end fixedly attached to the dummy TP, and a second end with an actuatable adjustment member for modifying a position of the dummy TP; measuring a position of the dummy TP component; removing the TP alignment apparatus from contact with the outlet of the compressor; and installing a TP according to the measured position of the dummy TP component.

Various other particular embodiments of the invention include an apparatus for aligning an end of a transition piece (TP) with an outlet of a combustor component. The apparatus can include: a mount configured to attach to the combustor component proximate the outlet; a hinge component pivotably connected to the mount, the hinge component having an axis of motion substantially perpendicular with a primary axis of the combustor component; a dummy transition piece (dummy TP) component fixedly attached to the hinge component for pivoting with the hinge component, the dummy TP having a set of measurement apertures configured to receive a measurement gauge, the set of measurement apertures each located proximate an edge of the dummy TP; and an adjustment apparatus having a first end fixedly attached to the dummy TP, and a second end with an actuatable adjustment member for modifying a position of the dummy TP.

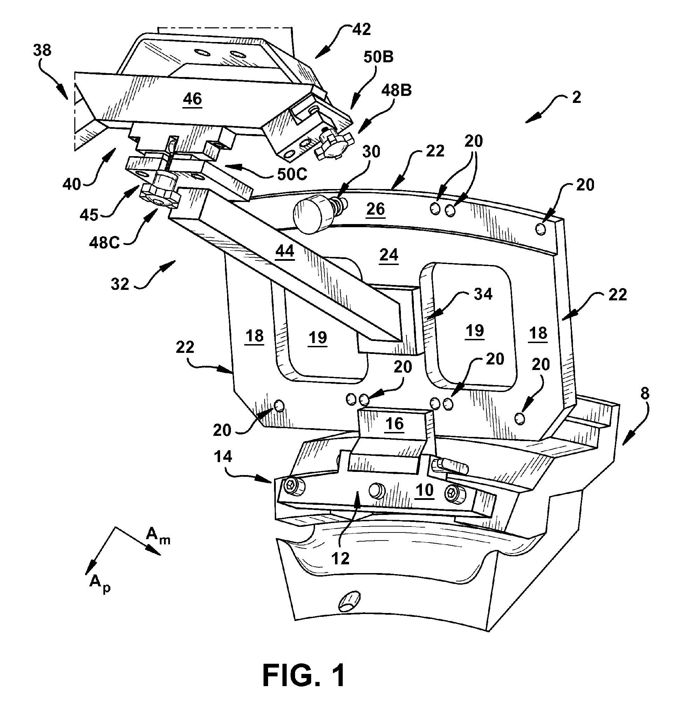

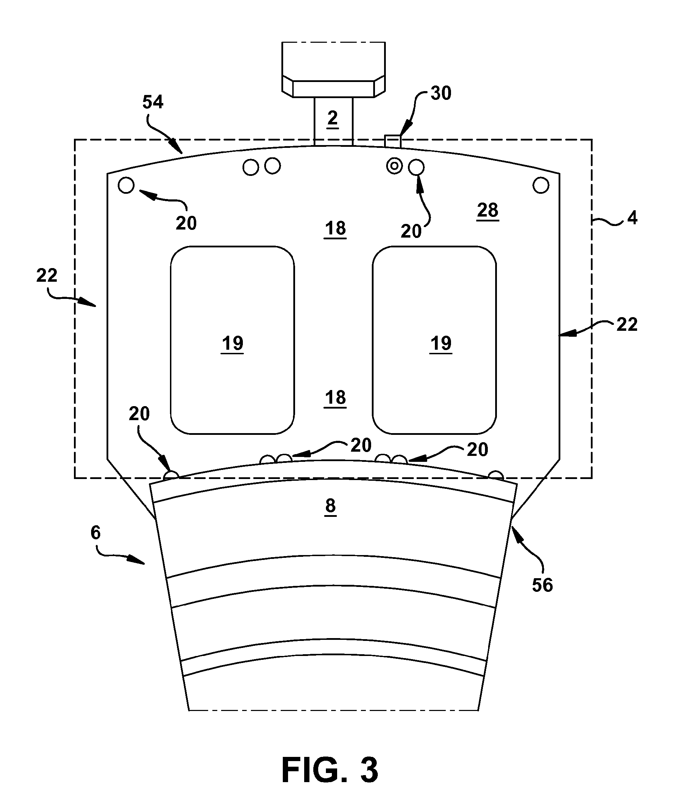

Turning to FIG. 1, a schematic perspective view of an apparatus 2 is shown according to various embodiment of the invention. It is understood that various components of the apparatus 2 can be formed of a metal, e.g., steel, aluminum, etc. The apparatus 2 is for aligning an end of a transition piece (TP) (outlined with dashed line and labeled 4 in FIG. 3) with an outlet 6 of a combustor component 8 (e.g., a gas turbine combustor) (FIG. 3). In some cases, the apparatus 2 can include: a mount 10 configured to attach to the combustor component 8 proximate the outlet 6. The mount 10 can include one or more apertures 12, e.g., for receiving a fastener 14 such as a pin, screw, bolt, clamp etc. to connect the mount 10 to the combustor component 8.

The apparatus 2 can further include a hinge component 16 pivotably connected to the mount 10. The hinge component 16 can have an axis of motion (Aₘ) substantially perpendicular with a primary axis (Aₚ) of the combustor component 8 (e.g., a primary axis of rotation of components within the combustor component 8. The hinge component 16 can allow for movement of portions of the apparatus 2 along the axis of motion (Aₘ).

The apparatus 2 can further include a dummy transition piece (dummy TP) 18 component fixedly attached (e.g., welded, brazed, or otherwise fixedly coupled) to the hinge component 16. The dummy TP 18 is fixedly attached to the hinge component 16 for pivoting with the hinge component 16. The dummy TP 18 can be formed in such a manner that it has a substantially lower weight than an actual (later-installed) TP (e.g., including one or more holes 19 or cavernous sections). That is, the dummy TP 18 can have a weight which is approximately one-quarter to one-third the weight of an actual TP to be connected with the combustion component 8. The dummy TP 18 can represent some dimensions of an actual TP, without the cumbersome weight of the actual TP. Additionally, the dummy TP 18 can include a set of (one or more) measurement apertures 20 proximate edges 22 of the dummy TP 18. These measurement apertures 20 can be sized and positioned on the dummy TP 18 to allow for measurement of particular clearances between the dummy TP 18 (e.g., edges 22) and the combustor component 8, as well as clearances between faces 24, 26, 28 (FIG. 3) of the dummy TP 18 and the combustor component 8. As described herein, these measurements can be made using a gauge 30, e.g., a digital gauge and/or a dial gauge. As noted herein, some of these clearances are referred to as "B" or "C" clearances in the art.

Also shown in FIG. 1, the apparatus can include an adjustment apparatus 32 having a first end 34 fixedly attached to the dummy TP (e.g., via a weld, braze, fixed pin, bolt, screw, etc.), and a second end 38 with an actuatable adjustment member 40 for modifying a position of the dummy TP 18. The adjustment apparatus 32 can affix to the bull-horn portion (also known simply as a bull-horn) 42 of a turbine (complete illustration of the turbine omitted for clarity of illustration).

The actuatable adjustment member 40 can include an adjustment arm 44 which is fixedly attached to the dummy TP 18. The actuatable adjustment member 40 can also include a cross-like fixture 46 which is movably connected with the adjustment arm 44 (e.g., via an adjustable connection point 45. The cross-like fixture 46 can include at least one adjustment dial (or knob, or other suitable adjustment mechanism) 48C, which can function to modify a position of the adjustment arm 44, and consequently, the dummy TP 18.

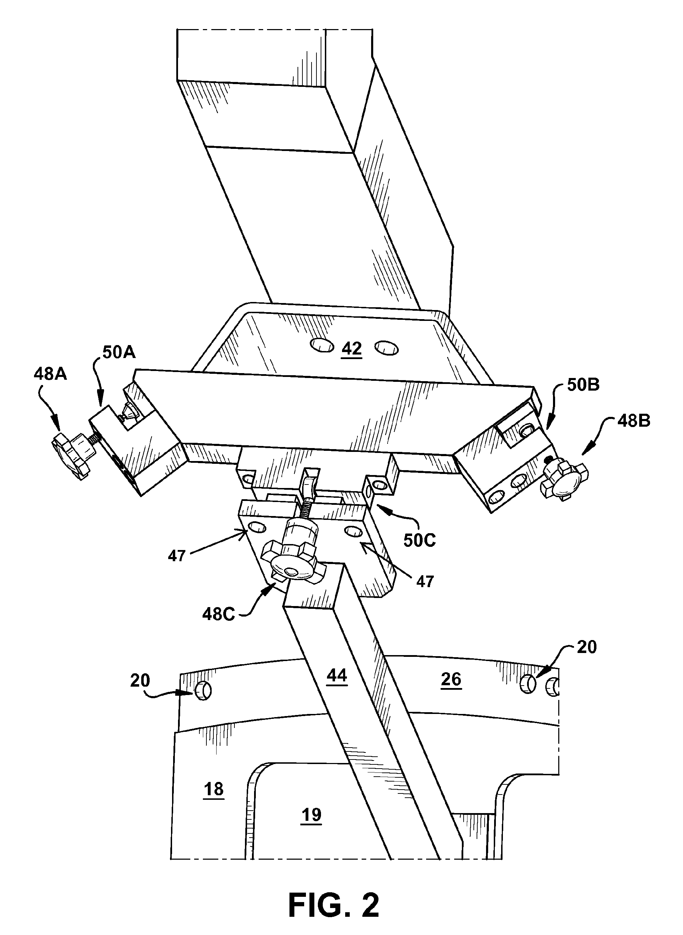

In particular cases, as shown in the close-up perspective view of FIG. 2, the cross-like fixture 46 can include an adjustment dial 48C, and at least two fixed dials 48A, 48B (FIG. 2). The fixed dials 48A, 48B are coupled to dial holders 50A, 50B, and are used to attach the cross-like fixture 46 to the bullhorn 42. In various embodiments, dial holders 50A are 50B are only used as mounts for the fixed dials 48A and 48B. In these cases, no measurements are taken at dial holders 50A or 50B. The adjustment dial 48C can be used to modify position of the dummy TP 18 (via the adjustment arm 44). The adjustment dial 48C is coupled with a dial holder 50C and the adjustment arm 44 at the adjustable connection point 45. As shown in FIG. 2, the adjustment arm 44 includes two measurement apertures 47 (e.g., similar to measurement apertures 20) proximate an end of the adjustment arm 44 which is opposite the dummy TP 18. These measurement apertures 47 can be measured using a depth mic and/or dial indicator (as described herein) to determine a position of each aperture 47, which consequently indicates a position of the adjustment arm 44 and the dummy TP 18. Adjustment of the adjustment dial 48C, causes movement of the adjustment arm 44, and consequently, movement of the dummy TP 18 about axis (Am) (forward/aft) along with the hinge component 16. In various embodiments, measurements obtained at each measurement aperture 47 on the adjustment arm 44 can be compared with measurements obtained at each measurement aperture 20 on the dummy TP 18 to verify a position of the dummy TP 18. That is, in some cases, measurements obtained at the measurement apertures 47 can be used to cross-check measurements obtained at the measurement apertures 20, and ultimately, more accurately determine a position of the dummy TP 18. In various embodiments, a method can include measuring a position of one or more of the measurement apertures 20 in the dummy TP 18, and subsequently, measuring a position of one or more of the measurement apertures 47 in the adjustment arm 44. The method can further include comparing the measurements from the apertures 20 in the dummy TP 18 with the measurements from the apertures 47 in the adjustment arm 44 to determine whether the distinct measurements indicate a common (same) position for the dummy TP 18.

FIG. 3 illustrates an end view of the dummy TP 18 affixed to the combustor component 8. In this view, the set of measurement apertures 20 are shown along with a gauge 30 for measuring relative to at least one of the set of measurement apertures 20. As shown, some measurement apertures 20 are located proximate the combustor component 8, and can help in determining clearances relative to the combustor component 8. In some particular embodiments, the set of measurement apertures 20 can include approximately twelve (12) measurement apertures, with six (6) measurement apertures proximate an upper edge 54 of the dummy TP 18, and six (6) apertures proximate a lower edge 56 (obstructed in this view) of the dummy TP 18.

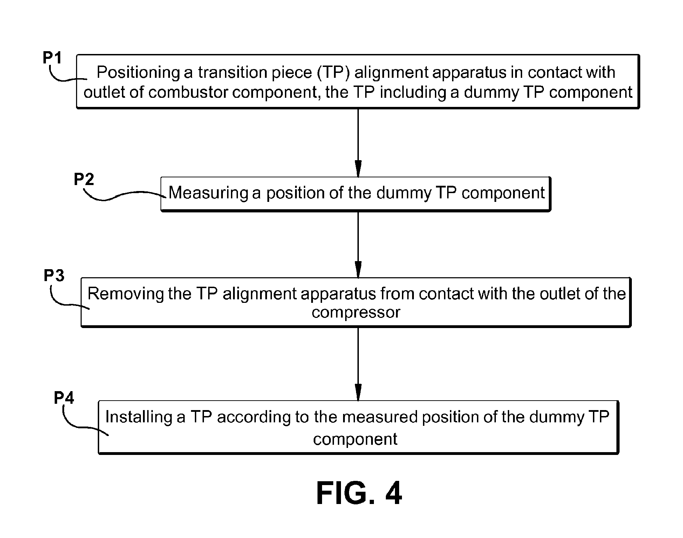

FIG. 4 shows a process flow diagram illustrating a method according to various embodiments of the invention. As shown, the method can include:
Process P1: Positioning a transition piece (TP) alignment apparatus (e.g., apparatus 2) in contact with an outlet 6 of a combustor component 8. The apparatus 2 can include a dummy TP 18 as described with reference to FIGS. 1-3. In some cases, the positioning includes affixing (placing and attaching) the apparatus 2 to the outlet 6 of the combustor component 8 using one or more attachment mechanisms 14. The positioning can further include actuating the adjustment member 40 to modify a position of the dummy TP 18.
Process P2: Measuring a position of the dummy TP component 18. The measuring can include measuring a position of one or more of the set of apertures 20 using a gauge 30 such as a dial gauge, depth mic or digital gauge. In some cases, the measuring of the position of the dummy TP 18 can include using the at least one gauge device 30 to measure the clearance proximate at least one of the plurality of measurement apertures 20. The measuring can further include determining a position and/or clearance of the measurement apertures 47 of the adjustment arm 44. This can include iteratively adjusting the adjustment dial 48C, and subsequently measuring measure the gap proximate measurement apertures 47. This gap measurement proximate measurement apertures 47 can be used to determine a size of a shim used to secure the actual TP. It is understood that processes P1 (e.g., the actuating of the adjustment member) and P2 can be repeated until the position of the dummy TP 18 is desirable, or until sufficient measurements are obtained to properly place an actual TP (e.g., including shim placements and sizes).
Process P3: Removing the TP alignment apparatus 2 from contact with the outlet 6 of the combustor component 8, e.g., including disconnecting the attachment mechanisms 14.
Process P4: Installing an actual TP according to the measured position of the dummy TP component 18. This can include attaching the actual TP using the measurements obtained during process P2.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. It is further understood that the terms "front" and "back" are not intended to be limiting and are intended to be interchangeable where appropriate.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An apparatus for aligning an end of a transition piece (TP) with an outlet of a combustor component, the apparatus comprising:
   a mount configured to attach to the combustor component proximate the outlet;
   a hinge component pivotably connected to the mount, the hinge component having an axis of motion substantially perpendicular with a primary axis of the combustor component;
   a dummy transition piece (dummy TP) component fixedly attached to the hinge component for pivoting with the hinge component; and
   an adjustment apparatus having a first end fixedly attached to the dummy TP, and a second end with an actuatable adjustment member for modifying a position of the dummy TP.
2. The apparatus of clause 1, further comprising a fastener for attaching the mount to the combustor component.
3. The apparatus of any preceding clause, wherein the dummy TP includes a plurality of measurement apertures for receiving at least one gauge device to measure a clearance proximate each of the plurality of apertures.
4. The apparatus of any preceding clause, wherein the actuatable adjustment member includes at least one measurement aperture for indicating the position of the dummy TP.
5. The apparatus of any preceding clause, wherein the at least one measurement aperture is sized for receiving at least one gauge device to measure a clearance proximate the at least one measurement aperture.
6. The apparatus of any preceding clause, wherein the dummy TP has a weight that is substantially less than a weight of the TP.
7. The apparatus of any preceding clause, wherein the second end is connected to a bull-horn portion of a turbine.
8. A method of aligning a transition piece (TP) with an outlet of a combustor system, the method comprising:
   positioning a TP alignment apparatus in contact with the outlet of the combustor component, the apparatus including:
      a mount configured to attach to the combustor component proximate the outlet;
      a hinge component pivotably connected to the mount, the hinge component having an axis of motion substantially perpendicular with a primary axis of the combustor component;
      a dummy transition piece (dummy TP) component fixedly attached to the hinge component for pivoting with the hinge component, the dummy TP having a set of apertures corresponding with set of apertures proximate the outlet of the combustion component; and
      an adjustment apparatus having a first end fixedly attached to the dummy TP, and a second end with an actuatable adjustment member for modifying a position of the dummy TP;
   measuring a position of the dummy TP component;
   removing the TP alignment apparatus from contact with the outlet of the combustor component; and
   installing a TP according to the measured position of the dummy TP component.
9. The method of any preceding clause, wherein the dummy TP component includes a plurality of measurement apertures for receiving at least one gauge device to measure a clearance proximate each of the plurality of measurement apertures
10. The method of any preceding clause, wherein the measuring of the position of the dummy TP component includes using the at least one gauge device to measure the clearance proximate at least one of the plurality of measurement apertures.
11. The method of any preceding clause, wherein the at least one gauge device includes at least one of a dial indicator or a digital indicator.
12. The method of any preceding clause, wherein the plurality of measurement apertures includes at least twelve apertures.
13. The method of any preceding clause, wherein the second end of the actuatable adjustment member includes a plurality of measurement apertures, and wherein the measuring of the position of the dummy TP component includes measuring a position of at least one of the plurality of measurement apertures in the actuatable adjustment member.
14. The method of any preceding clause, wherein the positioning of the TP alignment apparatus includes:
   placing the TP alignment apparatus in contact with the outlet of the combustor component; and
   actuating the adjustment member to modify a position of the dummy TP prior to the removing of the TP alignment apparatus.
15. An apparatus for aligning an end of a transition piece (TP) with an outlet of a combustor component, the apparatus comprising:
   a mount configured to attach to the combustor component proximate the outlet;
   a hinge component pivotably connected to the mount, the hinge component having an axis of motion substantially perpendicular with a primary axis of the combustor component;
   a dummy transition piece (dummy TP) component fixedly attached to the hinge component for pivoting with the hinge component, the dummy TP having a set of measurement apertures configured to receive a measurement gauge, the set of measurement apertures each located proximate an edge of the dummy TP; and
   an adjustment apparatus having a first end fixedly attached to the dummy TP, and a second end with an actuatable adjustment member for modifying a position of the dummy TP.
16. The apparatus of any preceding clause, wherein the dummy TP has a weight that is substantially less than a weight of the TP.
17. The apparatus of any preceding clausse, wherein the actuatable adjustment member includes at least one measurement aperture for indicating the position of the dummy TP.
18. The apparatus of any preceding clause, wherein the set of measurement apertures includes at least twelve apertures.

## Claims

1. An apparatus (2) for aligning an end of a transition piece (TP) (4) with an outlet (6) of a combustor component (8), the apparatus (2) comprising:
a mount (10) configured to attach to the combustor component (8) proximate the outlet (6);
a hinge component (16) pivotably connected to the mount (10), the hinge component (16) having an axis of motion substantially perpendicular with a primary axis of the combustor component (8);
a dummy transition piece component (18) fixedly attached to the hinge component (16) for pivoting with the hinge component (16); and
an adjustment apparatus (32) having a first end (34) fixedly attached to the dummy TP (18), and a second end (38) with an actuatable adjustment member (40) for modifying a position of the dummy TP (18).

2. The apparatus of claim 1, further comprising a fastener for attaching the mount (10) to the combustor component (8).

3. The apparatus of claim 1 or claim 2, wherein the dummy TP (18) includes a plurality of measurement apertures (20) for receiving at least one gauge device (30) to measure a clearance proximate each of the plurality of apertures (20).

4. The apparatus of claim 1, 2 or 3, wherein the actuatable adjustment member (40) includes at least one measurement aperture (47) for indicating the position of the dummy TP (18).

5. The apparatus of claim 4, wherein the at least one measurement aperture (47) is sized for receiving at least one gauge device (30) to measure a clearance proximate the at least one measurement aperture (47).

6. The apparatus of any preceding claim, wherein the second end (38) is connected to a bull-horn portion of a turbine.

7. The apparatus of claim 1, wherein the dummy TP (18) has a set of measurement apertures (20) configured to receive a measurement gauge, the set of measurement apertures each located proximate an edge of the dummy TP (18).

8. The apparatus of claim 7, wherein the actuatable adjustment member (40) includes at least one measurement aperture (47) for indicating the position of the dummy TP (18).

9. The apparatus of claim 7 or claim 8, wherein the set of measurement apertures (20) includes at least twelve apertures.

10. The apparatus of any preceding claim, wherein the dummy TP (18) has a weight that is substantially less than a weight of the TP (4).

11. A method of aligning a transition piece (TP) with an outlet of a combustor system, the method comprising:
positioning (P1) a TP alignment apparatus in contact with the outlet of the combustor component, the apparatus including:
a mount configured to attach to the combustor component proximate the outlet;
a hinge component pivotably connected to the mount, the hinge component having an axis of motion substantially perpendicular with a primary axis of the combustor component;
a dummy transition piece component fixedly attached to the hinge component for pivoting with the hinge component, the dummy TP having a set of apertures corresponding with set of apertures proximate the outlet of the combustion component; and
an adjustment apparatus having a first end fixedly attached to the dummy TP, and a second end with an actuatable adjustment member for modifying a position of the dummy TP;
measuring (P2) a position of the dummy TP component;
removing (P3) the TP alignment apparatus from contact with the outlet of the combustor component; and
installing (P4) a TP according to the measured position of the dummy TP component.

12. The method of claim 11, wherein the dummy TP component includes a plurality of measurement apertures for receiving at least one gauge device to measure a clearance proximate each of the plurality of measurement apertures

13. The method of claim 11 or claim 12, wherein the measuring (P2) of the position of the dummy TP component includes using the at least one gauge device to measure the clearance proximate at least one of the plurality of measurement apertures.

14. The method of claim 11, 12 or 13, wherein the second end of the actuatable adjustment member includes a plurality of measurement apertures, and wherein the measuring (P2) of the position of the dummy TP component includes measuring a position of at least one of the plurality of measurement apertures in the actuatable adjustment member.

15. The method of any one of claims 11 to 14, wherein the positioning (P1) of the TP alignment apparatus includes:
placing the TP alignment apparatus in contact with the outlet of the combustor component; and
actuating the adjustment member to modify a position of the dummy TP prior to the removing of the TP alignment apparatus.
